# EUROPÄISCHE PATENTSCHRIFT

(11) **EP 1 115 022 B1**
(45) Veröffentlichungstag und Bekanntmachung des Hinweises auf die Patenterteilung: **22.11.2006**
(21) Anmeldenummer: 00103837.1
(22) Anmeldetag: 24.02.2000
(51) Int. Cl.: G02B 26/12, G06K 7/10, H02K 29/00

(54) **Optoelektronische Abtastvorrichtung**
Optoelectronic scanning device
Dispositif de balayage opto-électronique

(30) Priorität: 07.01.2000 DE 10000445
(43) Veröffentlichungstag der Anmeldung: 11.07.2001
(73) Patentinhaber: Leuze electronic GmbH + Co. KG, 73277 Owen/Teck (DE)
(72) Erfinder: Claus, Armin, 72622 Nürtingen (DE); Wörner, Jörg, 73235 Weilheim (DE)
(74) Vertreter: Ruckh, Rainer Gerhard

(56) Entgegenhaltungen:
- EP-A- 0 260 156
- EP-A- 0 294 219
- US-A- 4 836 631
- US-A- 5 103 335
- US-A- 5 479 201
- US-A- 5 999 301
- PATENT ABSTRACTS OF JAPAN vol. 009, no. 062 (P-342), 19. März 1985 (1985-03-19) -& JP 59 197010 A (CANON KK), 8. November 1984 (1984-11-08)
- PATENT ABSTRACTS OF JAPAN vol. 011, no. 207 (P-592), 4. Juli 1987 (1987-07-04) -& JP 62 027713 A (CANON INC), 5. Februar 1987 (1987-02-05)
- PATENT ABSTRACTS OF JAPAN vol. 009, no. 281 (P-403), 8. November 1985 (1985-11-08) -& JP 60 123819 A (KOPARU DENSHI KK), 2. Juli 1985 (1985-07-02)

## Beschreibung

Die Erfindung betrifft eine optoelektronische Vorrichtung gemäß dem Oberbegriff des Anspruchs 1.

Derartige optoelektronische Vorrichtungen werden zur Erfassung von Marken eingesetzt, welche definierte Kontrastmuster aufweisen. Insbesondere kann die optoelektronische Vorrichtung als Barcodelesegerät zum Lesen von Barcodes ausgebildet sein.

Die optoelektronische Vorrichtung weist einen Sendelichtstrahlen emittierenden Sender sowie einen Empfangslichtstrahlen empfangenden Empfänger auf. Zudem ist eine Ablenkeinheit mit einem motorisch angetriebenen Polygonspiegelrad vorgesehen. Die Sendelichtstrahlen und die Empfangslichtstrahlen werden über das Polygonspiegelrad geführt. Durch die Drehbewegung des Polygonspiegelrads werden die Sendelichtstrahlen abgelenkt, so dass diese periodisch einen Raumbereich überstreichen, in welchem sich die Marken befinden.

Bei der Abtastung der Marken werden die Sendelichtstrahlen über die Marken geführt. Entsprechend dem Kontrastmuster der Marken weisen die an diesen zurückreflektierten Empfangslichtstrahlen eine Amplitudenmodulation auf. Die entsprechend modulierten Empfangssignale am Ausgang des Empfängers werden in einer Auswerteeinheit zur Erfassung der Marken ausgewertet.

Das Polygonspiegelrad wird mittels eines Motors angetrieben, so dass das Polygonspiegelrad mit einer vorgegebenen Drehzahl eine Drehbewegung ausführt. Üblicherweise werden hierzu handelsübliche Motoren eingesetzt, in welchen eine Motorsteuerung integriert ist. Zudem weist der Motor eine Welle auf. Auf die Welle wird eine mechanische Aufnahme aufgebracht, auf deren Oberseite das Polygonspiegelrad befestigt wird. Vorzugsweise weist das Polygonspiegelrad hierzu eine Halterung auf, an welcher die Aufnahme festgeschraubt wird. Die Motorsteuerung ist über ein Kabel mit der Auswerteeinheit verbunden, die auf einer separaten Leiterplatte angeordnet ist. Zur Kontaktierung ist am Ende des Kabels ein Stecker vorgesehen, der in eine entsprechende Buchse an der Auswerteeinheit eingesteckt wird.

Nachteilig hierbei ist, dass eine derartig ausgebildete Ablenkeinheit eine Vielzahl von elektrischen und mechanischen Komponenten aufweist. Die Montage dieser Komponenten ist zeitaufwendig und stellt damit einen unerwünscht hohen Kostenfaktor bei der Fertigung der optoelektronischen Vorrichtung dar. Zudem führen die Toleranzen der einzeln gefertigten Komponenten dazu, dass Genauigkeitsprobleme bei derartig hergestellten Ablenkeinheiten auftreten. Schließlich weisen derartig ausgebildete Ablenkeinheiten eine unerwünscht große Baugröße auf.

Der Erfindung liegt die Aufgabe zugrunde, eine Ablenkeinheit für eine optoelektronische Vorrichtung der eingangs genannten Art zu schaffen, die bei möglichst geringen Fertigungskosten und geringen Fertigungstoleranzen eine möglichst geringe Baugröße aufweist.

Zur Lösung dieser Aufgabe sind die Merkmale des Anspruchs 1 vorgesehen. Vorteilhafte Airsführungsformen und zweckmäßige Weiterbildungen der Erfindung sind in den Unteransprüchen beschrieben.

Bei der erfindungsgemäßen optoelektronischen Vorrichtung ist die Auswerteeinheit auf einer Leiterplatte integriert, wobei der Motor zum Antrieb des Polygonspiegelrads eine an dieser Leiterplatte ausmündende Welle aufweist, an welcher das Polygonspiegelrad drehbar gelagert ist. Zudem weist der Motor eine Spule auf, die auf der Leiterplatte aufsitzt und an diese angeschlossen ist.

Diese Spule wirkt mit einem an der Innenseite des Polygonspiegelrads befestigten Magneten zusammen.

Ein wesentlicher Vorteil hierbei besteht darin, dass die Welle und die Spule des Motors direkt an der Leiterplatte angebracht sind, auf welcher die Auswerteeinheit integriert ist. Die Ansteuerung des Motors, insbesondere der Spule erfolgt daher direkt über die Auswerteeinheit.

Damit entfällt eine separate Motorsteuerung und ebenfalls eine elektrische Verbindung zwischen einer solchen Motorsteuerung und der Auswerteeinheit mittels eines Kabels und eines Steckers.

Dadurch kann zum einen der Platzbedarf der Ablenkeinheit erheblich verringert werden. Durch die so ausgebildete Ablenkeinheit kann insbesondere auch die Baugröße der gesamten optoelektronischen Vorrichtung verkleinert werden. Zudem wird dadurch auch eine erhebliche Reduktion der Herstellkosten der Vorrichtung erreicht.

Schließlich ist vorteilhaft, dass die Ablenkeinheit nur eine geringe Anzahl von Einzelkomponenten aufweist. Die Fertigungstoleranzen bei der Fertigung der Ablenkeinheit sind dementsprechend gering. Zudem kann die Ablenkeinheit schnell und einfach montiert werden.

Die Erfindung wird im nachstehenden anhand der Zeichnungen erläutert. Es zeigen:
- Figur 1:: Prinzipaufbau einer als Barcodelesegerät ausgebildeten optoelektronischen Vorrichtung.
- Figur 2:: Erstes Ausführungsbeispiel einer Ablenkeinheit für die Vorrichtung gemäß Figur 1.
- Figur 3:: Zweites Ausfiihrungsbeispiel einer Ablenkeinheit für die Vorrichtung gemäß Figur 1.

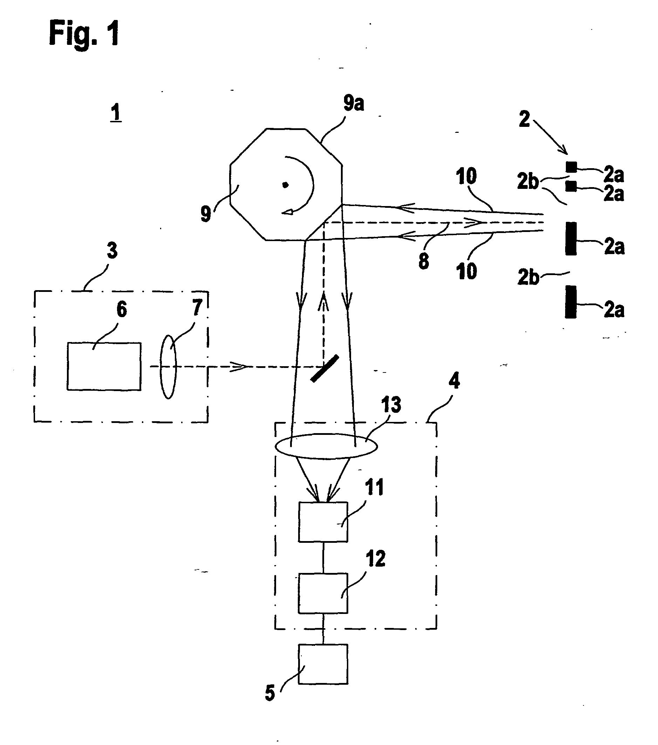

In Figur 1 ist der prinzipielle Aufbau einer optoelektronischen Vorrichtung 1 zum Erkennen von mit definierten Kontrastmustern versehenen Marken dargestellt. Prinzipiell können die Marken beliebige Folgen und Formen von aneinander angrenzenden Hell-Dunkelflächen, vorzugsweise Schwarz-Weiß-Flächen, aufweisen. Im vorliegenden Ausführungsbeispiel sind die Marken von Barcodes 2 gebildet. Die Barcodes 2 bestehen im wesentlichen aus einer Folge von schwarzen und weißen Strichelementen 2a, 2b definierter Länge und Breite. Die optoelektronische Vorrichtung 1 ist dann als Barcodelesegerät ausgebildet.

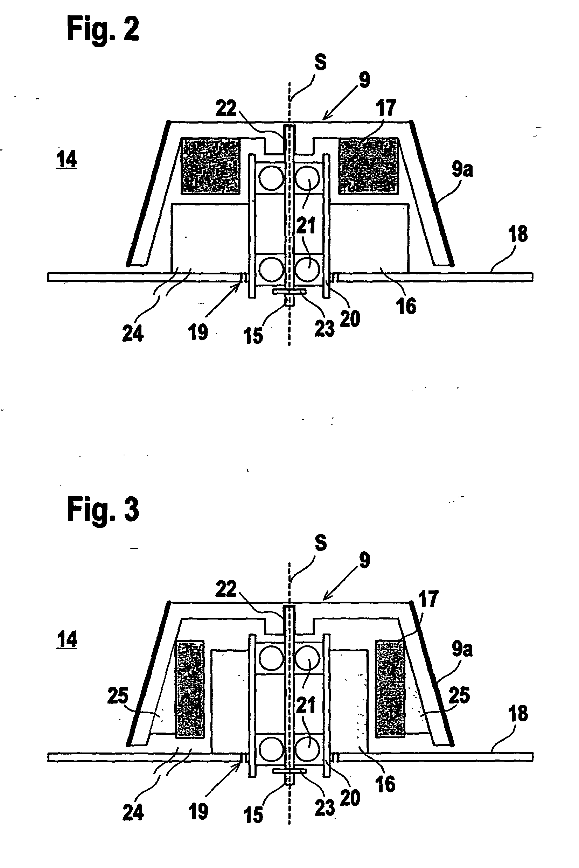

Die optoelektronische Vorrichtung 1 weist ein Sendeelement 3, ein Empfangselement 4 sowie eine Auswerteeinheit 5 auf. Das Sendeelement 3 besteht aus einem Sender 6, vorzugsweise einer Laserdiode, sowie aus einer dem Sender 6 vorgeschalteten Sendeoptik 7 zur Fokussierung der Sendelichtstrahlen 8. Die fokussierten Sendelichtstrahlen 8 werden über ein rotierendes Polygonspiegelrad 9 abgelenkt und über das zu detektierende Barcode-Symbol 2 geführt. Die Drehachse des Polygonspiegelrads 9 ist senkrecht zur in Figur 2 dargestellten Äquatorialebene des Polygonspiegelrads 9 angeordnet. Durch die Drehbewegung des Polygonspiegelrads 9 werden die Sendelichtstrahlen 8 periodisch innerhalb eines vorgegebenen Winkelbereichs innerhalb der die Abtastebene bildenden Äquatorialebene geführt. Dabei können entsprechend der Fokussierung der Sendelichtstrahlen 8 Barcodes 2 in einem vorgegebenen Distanzbereich gelesen werden.

Bei dem in Figur 1 dargestellten Ausführungsbeispiel weist das Polygonspiegelrad 9 acht Spiegelflächen 9a in Form von Facetten auf, an welchen die Sendelichtstrahlen 8 abgelenkt werden. Entsprechend der Anzahl der Facetten des Polygonspiegelrads 9 wird von den Sendelichtstrahlen 8 periodisch ein Winkelbereich von Δα = 90° überstrichen, wobei die Abtastebene, in der die Sendelichtstrahlen 8 geführt sind, entsprechend der Anordnung gemäß Figur 1 in der Äquatorialebene des Polygonspiegelrads 9 liegt.

Die vom Barcode 2 reflektierten Empfangslichtstrahlen 10 werden über das Polygonspiegelrad 9 zum Empfangselement 4 geführt. Das Empfangselement 4 besteht aus einem Empfänger 11, der von einer Fotodiode gebildet ist und in dem die Empfangslichtstrahlen 10 in ein elektrisches Empfangssignal gewandelt werden. Dem Empfänger 11 ist ein Verstärker 12 nachgeschaltet. Zur Verbesserung der Nachweisempfindlichkeit ist dem Empfangselement 4 eine Empfangsoptik 13 vorgeschaltet.

Das am Ausgang des Empfangselements 4 anstehende Empfangssignal wird der Auswerteeinheit 5 zugeführt.

Entsprechend dem Kontrastmuster des Barcodes 2 weisen die an diesem reflektierten Empfangslichtstrahlen 10 eine Amplitudenmodulation auf Das durch die Empfangslichtstrahlen 10 am Ausgang des Empfängers 11 anstehende Empfangssignal weist eine entsprechende Amplitudenmodulation auf. In der Auswerteeinheit 5 wird anhand der Amplitudenmodulation des Empfangssignals das Kontrastmuster des Barcodes 2 rekonstruiert.

Die Figuren 2 und 3 zeigen zwei Ausführungsbeispiele einer Ablenkeinheit 14, deren Bestandteil das Polygonspiegelrad 9 gemäß Figur 1 ist. Zudem umfasst die Ablenkeinheit 14 einen Motor, mittels dessen das Polygonspiegelrad 9 angetrieben wird, so dass dieses mit einer vorgegebenen Drehzahl eine Drehbewegung ausführt. Dieser Motor umfasst eine Welle 15, an der das Polygonspiegelrad 9 drehbar gelagert ist, sowie eine Spule 16 und einen mit dieser zusammenwirkenden Magneten 17.

Die Welle 15 mündet an einer Leiterplatte 18 aus, auf welcher die Auswerteeinheit 5 integriert ist. Die Längsachse der Welle 15 verläuft dabei senkrecht zur Oberfläche der Leiterplatte 18. Die Spule 16 sitzt auf dieser Leiterplatte 18 auf. Der Magnet 17 ist an dem Polygonspiegelrad 9 befestigt und dreht sich mit diesem mit. Über die Auswerteeinheit 5 wird in die Spule 16 ein Strom eingespeist, wodurch in der Spule 16 ein Magnetfeld erzeugt wird, durch welches der Magnet 17 und damit das Polygonspiegelrad 9 in eine Drehbewegung versetzt wird.

Auf der Leiterplatte 18 sind die elektronischen Bauelemente der Auswerteeinheit 5 angeordnet, wobei diese der Übersichtlichkeit halber in den Figuren 2 und 3 nicht dargestellt sind. Im Zentrum der Leiterplatte 18 ist eine Bohrung 19 vorgesehen. In dieser Bohrung 19 ist ein Tubus 20 gelagert, der von der Leiterplatte 18 senkrecht hervorsteht. Der Tubus 20 besteht aus einem hohlzylindrischen Kunststoffteil, dessen Oberseite und Unterseite offen sind. Alternativ kann der Tubus 20 aus Metall bestehen.

Im Innern des Tubus 20 verläuft die Welle 15, wobei die Welle 15 über Lager 21 an der Innenwand des Tubus 20 gelagert ist. Die Welle 15 verläuft in Längsrichtung des Tubus 20 entlang dessen Symmetrieachse S. Die Lager 21 können insbesondere als Kugellager, Gleitlager oder Rollenlager ausgebildet sein. Die Welle 15 dreht sich entsprechend der über dem Motor vorgegebenen Drehzahl um die Symmetrieachse S und versetzt das daran befestigte Polygonspiegelrad 9 in eine entsprechende Drehbewegung.

Das Polygonspiegelrad 9 ist in den dargestellten Ausführungsbeispielen von einem Kunststoffspritzteil gebildet. Dieses Polygonspiegelrad 9 weist schräg auf eine ebene Decke zulaufende Seitenwände auf. Die Außenseiten der Seitenwände des Polygonspiegelrads 9 sind mit einer spiegelnden Schicht beschichtet und bilden die Spiegelflächen 9a, an welchen die Sendelichtstrahlen 8 abgelenkt werden.

Die Decke und die Seitenwände begrenzen einen Hohlraum im Innern des Polygonspiegelrads 9, welches an der Unterseite offen ist. Der Tubus 20 mit der darin gelagerten Welle 15 ragt von der Unterseite in den Hohlraum des Polygonspiegelrads 9. Die Welle 15 steht über das obere Ende des Tubus 20 hervor. Das obere freie Ende der Welle 15 ist mit der Decke des Polygonspiegelrads 9 starr verbunden. Hierzu ist die Decke des Polygonspiegelrads 9 in ihrem Zentrum zur Unterseite hin verbreitert. In dieser Verbreiterung ist eine in der Symmetrieachse S des Polygonspiegelrads 9 verlaufende und an der Unterseite der Decke ausmündende Bohrung 22 vorgesehen, in die das freie Ende der Welle 15 eingepresst ist. Falls das Polygonspiegelrad von einem Kunststoffspritzteil gebildet ist, kann die Welle auch als Einlegeteil ausgebildet sein, welches bei der Herstellung des Kunststoffspritzteils mit Kunststoff umspritzt wird.

An der Unterseite des 20 ist die Welle 15 mit einem Klemmverschluss 23 fixiert. Das Polygonspiegelrad 9 ist somit symmetrisch zu der von der Symmetrieachse S gebildeten Drehachse, in der die Welle 15 liegt, angeordnet, wobei die Seitenwände des Polygonspiegelrads 9 in vorgegebenem Abstand zum Tubus 20 verlaufen.

Die Bauhöhen der Welle 15 und des Tubus 20 sind an die Bauhöhe des Polygonspiegelrads 9 angepasst, so dass die unteren Ränder der Seitenwände des Polygonspiegelrads 9 dicht oberhalb der Leiterplatte 18 verlaufen. Dabei ist jedoch der Abstand so groß gewählt, dass es bei der Drehung des Polygonspiegelrads 9 nicht zu einem Kontakt mit der Leiterplatte 18 oder darauf angeordneten Bauelementen kommt.

Die Spule 16 liegt an der Außenseite des Tubus 20 an. Die Spule 16 ist dabei rotationssymmetrisch zur Drehachse der Welle 15 angeordnet und sitzt auf einem nicht dargestellten Spulenkern auf. Vorzugsweise ist der Tubus 20 an der Leiterplatte 18 eingepresst, während die Spule 16 und der Spulenkern zur Fixierung festgeklebt sind.

Die Spule 16 ist über Anschlussmittel 24 mit der Leiterplatte 18 verbunden. Im einfachsten Fall sind die Anschlussmittel 24 von Drähten gebildet, die von der Spule 16 auf die Auswerteeinheit 5 geführt sind. Über die Anschlussmittel 24 wird von der Auswerteeinheit 5 der Strom in die Spule 16 eingespeist, welcher das Magnetfeld erzeugt, das den Magneten 17 und das Polygonspiegelrad 9 in eine Drehbewegung versetzt.

Zur Fixierung des Magneten 17 am Polygonspiegelrad 9 an den Innenseiten der Decke und/oder der Seitenwände sind Aufnahmen vorgesehen, die vorzugsweise einstückig mit dem das Polygonspiegelrad 9 bildenden Kunststoffspritzteil ausgebildet sind. Zweckmäßigerweise wird der Magnet 17 an den Aufnahmen festgeklebt.

Bei dem in Figur 2 dargestellten Ausführungsbeispiel sind der Magnet 17 und die Spule 16 jeweils als Scheiben ausgebildet, die einen kreisförmigen Querschnitt aufweisen. Dabei sind die Spule 16 und der Magnet 17 übereinander liegend angeordnet, so dass die Oberseite der Spule 16 der Unterseite des Magneten 17 in geringem Abstand gegenüber liegen.

Die Spule 16 und der Magnet 17 weisen jeweils eine diese axial durchsetzende zentrale Öffnung auf. Diese Öffnungen weisen etwa denselben Durchmesser auf und verlaufen koaxial und symmetrisch zu den Symmetrieachsen des Magneten 17 und der Spule 16, die mit der Symmetrieachse S des Polygonspiegelrads 9 zusammenfallen. Im Innern der Öffnungen verläuft der Tubus 20 mit der darin gelagerten Welle 15. Während die Spule 16 an der Außenseite des Tubus 20 dicht anliegt, ist der Abstand des Magneten 17 zur Außenwand des Tubus 20 etwas größer, so dass eine Reibung des Magneten 17 am Tubus 20 während der Drehung des Polygonspiegelrads 9 ausgeschlossen ist.

Die Außendurchmesser des scheibenförmig ausgebildeten Magneten 17 und der entsprechend ausgebildeten Spule 16 sind im wesentlichen gleich groß und an den Innendurchmesser des Polygonspiegelrads 9 angepasst. Der Magnet 17 und die Spule 16 füllen somit nahezu den gesamten Zwischenraum zwischen den Innenseiten der Seitenwände des Polygonspiegelrads 9 und dem Tubus 20 aus.

Der Magnet 17 ist in diesem Ausführungsbeispiel an der Decke des Polygonspiegelrads 9 befestigt. Zur Fixierung des Magneten 17 können an der Innenseite der Decke Aufnahmen in Form von nicht dargestellten Vertiefungen vorgesehen sein, in welche der Magnet 17 eingerastet wird. Zusätzlich oder alternativ kann der Magnet 17 an der Decke des Polygonspiegelrads 9 festgeklebt werden.

Bei dem in Figur 3 dargestellten Ausführungsbeispiel sind der Magnet 17 und die Spule 16 jeweils ringförmig ausgebildet. Die Spule 16 ist in Form eines ersten Ringes ausgebildet, der den Tubus 20 umschließt. Der Magnet 17 ist in Form eines zweiten Ringes ausgebildet, der koaxial zum ersten, von der Spule 16 gebildeten Ring angeordnet ist. Dabei liegen sich die äußere Mantelfläche des von der Spule 16 gebildeten ersten Rings und die innere Mantelfläche des von dem Magneten 17 gebildeten zweiten Rings in geringem Abstand gegenüber, so dass bei der Drehung des Polygonspiegelrads 9 keine Reibung zwischen dem Magneten 17 und der Spule 16 auftrifft.

Die ringförmige Spule 16 erstreckt sich über nahezu die gesamte Höhe des Tubus 20. Die Bauhöhe des ringförmigen Magneten 17 entspricht im wesentlichen der Bauhöhe der ringförmigen Spule 16, so dass nahezu die gesamten Mantelflächen des Magneten 17 und der Spule 16 einander gegenüber liegen.

Bei dem Ausführungsbeispiel gemäß Figur 3 ist der ringförmige Magnet 17 mit seiner äußeren Mantelfläche an den Innenseiten der Seitenwände des Polygonspiegelrads 9 befestigt. Zur Befestigung des Magneten 17 stehen von den Innenseiten der Seitenwände als Stege 25 ausgebildete Aufnahmen hervor, an welchen der Magnet 17 durch Rastmittel befestigt werden kann. Alternativ oder zusätzlich kann der Magnet 17 an den Stegen 25 festgeklebt werden.

## Patentansprüche

1. Optoelektronische Vorrichtung zur Erfassung von definierten Kontrastmustern aufweisenden Marken mit einem Sendelichtstrahlen emittierenden Sender, einem Empfangslichtstrahlen empfangenden Empfänger, einer ein motorisch angetriebenes Polygonspiegelrad aufweisenden Ablenkeinheit, wobei die Sendelichtstrahlen und Empfangslichtstrahlen zur Abtastung der Marken über das Polygonspiegelrad geführt sind, und mit einer Auswerteeinheit zur Auswertung der am Empfänger anstehenden Empfangssignale, wobei die Auswerteeinheit (5) auf einer Leiterplatte (18) integriert ist, der Motor zum Antrieb des Polygonspiegelrads (9) eine an der Leiterplatte (18) ausmündende Welle (15), an welcher das Polygonspiegelrad (9) drehbar gelagert ist, sowie eine auf der Leiterplatte (18) aufsitzende und an diese angeschlossene Spule (16) aufweist, **dadurch gekennzeichnet, dass** das Polygonspiegelrad (9) von einem Kunststoffspritzteil gebildet ist, welches im Innern einen von dessen Seitenwänden und Decke begrenzten Hohlraum aufweist, in welchem die Welle (15) verläuft, und dass die Welle (15) als Einlegeteil in dem als Kunststoffspritzteil ausgebildeten Polygonspiegelrad (9) mit Kunststoff umspritzt ist wobei die Spule (16) mit einem an der Innenseite des Polygonspiegelrads (9) befestigten Magneten (17) zusammenwirkt.

2. Optoelektronische Vorrichtung nach Anspruch 1, **dadurch gekennzeichnet, dass** in der Leiterplatte (18) eine Bohrung (19) vorgesehen ist, in welcher ein senkrecht von der Leiterplatte (18) hervorstehender Tubus (20) gelagert ist, und dass im Innern des Tubus (20) die Welle (15) über Lager (21) geführt umläuft.

3. Optoelektronische Vorrichtung nach Anspruch 2, **dadurch gekennzeichnet, dass** der Tubus (20) von einem hohlzylindrischen Kunststoffteil gebildet ist, in dessen Symmetrieachse (S) die Welle (15) verläuft.

4. Optoelektronische Vorrichtung nach einem der Ansprüche 2 oder 3, **dadurch gekennzeichnet, dass** die Lager (21) von Kugel-, Gleit- oder Rollenlagern gebildet sind.

5. Optoelektronische Vorrichtung nach einem der Ansprüche 2 bis 4, **dadurch gekennzeichnet, dass** die Welle (15) mit einem Klemmverschluss (23) an der Unterseite des Tubus (20) fixiert ist.

6. Optoelektronische Vorrichtung nach einem der Ansprüche 1 bis 5, **dadurch gekennzeichnet, dass** die Bauhöhe der Welle (15) an die Bauhöhe des Polygonspiegelrads (9) angepasst ist, so dass die unteren Ränder der Seitenwände des Polygonspiegelrads (9) dicht oberhalb der Leiterplatte (18) verlaufen.

7. Optoelektronische Vorrichtung nach einem der Ansprüche 1 - 6, **dadurch gekennzeichnet, dass** die Spule (16) auf einem in die Leiterplatte (18) aufgepressten Spulenkern aufsitzt.

8. Optoelektronische Vorrichtung nach einem der Ansprüche 1 - 7, **dadurch gekennzeichnet, dass** die Spule (16) über Anschlüsse (24) an die Leiterplatte (18) angeschlossen ist.

9. Optoelektronische Vorrichtung nach einem der Ansprüche 2 - 8, **dadurch gekennzeichnet, dass** die Spule (16) an der Außenseite des Tubus (20) anliegt und einen rotationssymmetrischen Querschnitt aufweist.

10. Optoelektronische Vorrichtung nach einem der Ansprüche 1 - 9, **dadurch gekennzeichnet, dass** an den Innenseiten der Decke und/oder den Seitenwänden des Polygonspiegelrads (9) Aufnahmen vorgesehen sind, an welchen der Magnet (17) fixiert ist.

11. Optoelektronische Vorrichtung nach Anspruch 10, **dadurch gekennzeichnet, dass** der Magnet (17) an den Aufnahmen festgeklebt ist.

12. Optoelektronische Vorrichtung nach einem der Ansprüche 10 oder 11, **dadurch gekennzeichnet, dass** der Magnet (17) und die Spule (16) jeweils von Scheiben mit kreisförmigem Querschnitt gebildet sind, die in geringem Abstand zueinander im Hohlraum des Polygonspiegelrads (9) übereinander liegend angeordnet sind.

13. Optoelektronische Vorrichtung nach Anspruch 12, **dadurch gekennzeichnet, dass** die den Magnet (17) und die Spule (16) bildenden Scheiben jeweils eine diese axial durchsetzende zentrale Öffnung mit kreisförmigem Querschnitt aufweisen, wobei in den Öffnungen der Tubus (20) verläuft.

14. Optoelektronische Vorrichtung nach einem der Ansprüche 12 oder 13, **dadurch gekennzeichnet, dass** die Aufnahmen zur Fixierung des Magneten (17) von in der Decke des Polygonspiegelrads (9) verlaufenden Vertiefungen gebildet sind.

15. Optoelektronische Vorrichtung nach einem der Ansprüche 12 - 14, **dadurch gekennzeichnet, dass** die den Magneten (17) und die Spule (16) bildenden Scheiben denselben Durchmesser aufweisen, der an den Durchmesser des Hohlraums des Polygonspiegelrads (9) angepasst ist.

16. Optoelektronische Vorrichtung nach einem der Ansprüche 10 oder 11, **dadurch gekennzeichnet, dass** die Spule (16) in Form eines den Tubus (20) umschließenden ersten Rings ausgebildet ist, und dass der Magnet (17) als zweiter Ring ausgebildet ist, der koaxial zum ersten Ring angeordnet ist und diesen umschließt, wobei die innere Mantelfläche des zweiten Rings der äußeren Mantelfläche des ersten Rings in geringem Abstand gegenüber liegt.

17. Optoelektronische Vorrichtung nach Anspruch 16, **dadurch gekennzeichnet, dass** die Bauhöhen der Ringe im wesentlichen der Bauhöhe des Tubus (20) entsprechen.

18. Optoelektronische Vorrichtung nach einem der Ansprüche 16 oder 17, **dadurch gekennzeichnet, dass** die Aufnahmen zur Fixierung des Magneten (17) von Stegen (25) gebildet sind, die von den Innenseiten der Seitenwände des Polygonspiegelrads (9) hervorstehen.

## Claims

1. Opto-electronic device for detection of marks having defined contrast patterns, with a transmitter emitting transmitted light beams, a receiver receiving received light beams, a deflecting unit having a motor-driven polygon mirror wheel, wherein the transmitted light beams and received light beams are guided by way of a polygon mirror wheel for scanning the marks, and with an evaluating unit for evaluation of the received signals present at the receiver, wherein the evaluating unit (5) is integrated on a circuitboard (18), the motor for drive of the polygon mirror wheel (9) comprises a shaft (15), which opens at the circuitboard (18) and on which the polygon mirror wheel (9) is mounted to be rotatable, as well as a coil (16) seated on the circuitboard (18) and connected therewith, **characterised in that** the polygon mirror wheel (9) is formed by a plastics material injection-moulded part having in the interior a cavity, which is bounded by the side walls and top thereof and in which the shaft (15) extends, and that the shaft (15) is injection-moulded around by plastics material as an insert part in the polygon mirror wheel (9) formed as a plastics material injection-moulded part, wherein the coil (16) co-operates with a magnet (17) fastened to the inner side of the polygon mirror wheel (9).

2. Opto-electronic device according to claim 1, **characterised in that** a bore (19), in which a tube (20) protruding vertically from the circuitboard (18) is mounted, is provided in the circuitboard (18) and that in the interior of the tube (20) the shaft (15) rotates guided by way of bearings (21).

3. Opto-electronic device according to claim 2, **characterised in that** the tube (20) is formed by a hollow-cylindrical plastics material part and the shaft (15) extends in the axis (S) of symmetry thereof.

4. Opto-electronic device according to one of claims 2 and 3, **characterised in that** the bearings (21) are formed by ball, slide or roller bearings.

5. Opto-electronic device according to one of claims 2 to 4, **characterised in that** the shaft (15) is fixed to the underside of the tube (20) by a clamping fastener (23).

6. Opto-electronic device according to one of claims 1 to 5, **characterised in that** the constructional height (15) is adapted to the constructional height of the polygon mirror wheel (9) so that the lower edges of the side walls of the polygon mirror wheel (9) run closely above the circuitboard (18).

7. Opto-electronic device according to one of claims 1 to 6, **characterised in that** the coil (16) is seated on a coil core press-fitted in the circuitboard (18).

8. Opto-electronic device according to one of claims 1 to 7, **characterised in that** the coil (16) is connected with the circuitboard (18) by way of connections (24).

9. Opto-electronic device according to one of claims 2 to 8, **characterised in that** the coil (16) bears against the outer side of the tube (20) and has a rotationally symmetrical cross-section.

10. Opto-electronic device according to one of claims 1 to 9, **characterised in that** mounts to which the magnet (17) is fixed are provided at the inner sides of the top and/or the side walls of the polygon mirror wheel (9).

11. Opto-electronic device according to claim 10, **characterised in that** the magnet (7) is firmly glued to the mounts.

12. Opto-electronic device according to one of claims 10 and 11, **characterised in that** the magnet (17) and the coil (16) are each formed by discs with circular cross-section, which are arranged to be disposed one above the other at a small mutual spacing in the cavity of the polygon mirror wheel (9).

13. Opto-electronic device according to claim 12, **characterised in that** the discs forming the magnet (17) and the coil (16) each have a central opening which axially penetrates this and has a circular cross-section, wherein the tube (20) extends in the opening.

14. Opto-electronic device according to one of claims 12 and 13, **characterised in that** the mounts for fixing the magnet (17) are formed by recesses extending in the top of the polygon mirror wheel (9).

15. Opto-electronic device according to one of claims 12 to 14, **characterised in that** the discs forming the magnet (17) and the coil (16) have the same diameter, which is matched to the diameter of the cavity of the polygon mirror wheel (9).

16. Opto-electronic device according to one of claims 10 and 11, **characterised in that** the coil (16) is constructed in the form of a first ring enclosing the tube (20) and that the magnet (17) is constructed as a second ring which is arranged coaxially with respect to the first ring and encloses this, wherein the inner circumferential surface of the second ring lies opposite the outer circumferential surface of the first ring at a small spacing.

17. Opto-electronic device according to claim 16, **characterised in that** the constructional heights of the rings substantially correspond with the constructional height of the tube (20).

18. Opto-electronic device according to one of claims 16 and 17, **characterised in that** the mounts for fixing the magnet (17) are formed by webs protruding from the inner sides of the side walls of the polygon mirror wheel (9).

## Revendications

1. Dispositif optoélectronique pour la saisie de marques munies de motifs contrastés définis, comprenant un émetteur émettant des rayons lumineux d'émission, un récepteur recevant des rayons lumineux de réception, une unité de déflexion présentant une roue à miroir polygonal entraînée par moteur, les rayons lumineux d'émission et les rayons lumineux de réception étant guidés au moyen ou par l'intermédiaire de la roue à miroir polygonal, et comprenant une unité d'évaluation pour évaluer les signaux de réception présents au récepteur, l'unité d'évaluation (5) étant intégrée sur une carte à circuit imprimé (18), le moteur d'entraînement de la roue à miroir polygonal (9) présentant un arbre (15) aboutissant à la carte à circuit imprimé (18), sur lequel la roue à miroir polygonal (9) est montée tournante, ainsi qu'une bobine (16) montée sur la carte à circuit imprimé (18) et connectée à celle-ci, **caractérisé par le fait que** la roue à miroir polygonal (9) est formée d'une pièce injectée en matière plastique qui présente à l'intérieur une cavité limitée par ses parois latérales et son plafond, dans laquelle passe l'arbre (15), et que l'arbre (15) est enrobé par injection de matière plastique sous forme d'insert dans la roue à miroir polygonal (9) réalisée sous forme de pièce injectée en matière plastique, la bobine (16) coopérant avec un aimant (17) fixé sur le côté intérieur de la roue à miroir polygonal (9).

2. Dispositif optoélectronique selon la revendication 1, **caractérisé par le fait qu'**il est prévu dans la carte à circuit imprimé (18) un trou (19) dans lequel est logé un tube (20) faisant saillie de la carte à circuit imprimé (18), et que l'arbre (15) tourne à l'intérieur du tube (20) guidé par des paliers (21).

3. Dispositif optoélectronique selon la revendication 2, **caractérisé par le fait que** le tube (20) est formé d'une pièce en matière plastique cylindrique creuse sur l'axe de symétrie (S) de laquelle passe l'arbre (15).

4. Dispositif optoélectronique selon l'une des revendications 2 ou 3, **caractérisé par le fait que** les paliers (21) sont formés de paliers à billes, de paliers lisses ou de paliers à rouleaux.

5. Dispositif optoélectronique selon l'une des revendications 2 à 4, **caractérisé par le fait que** l'arbre (15) est fixé par un dispositif de verrouillage à serrage (23) sur la face inférieure du tube (20).

6. Dispositif optoélectronique selon l'une des revendications 1 à 5, **caractérisé par le fait que** la hauteur de l'arbre (15) est adaptée à la hauteur de la roue à miroir polygonal (9) de telle manière que les bords inférieurs des parois latérales de la roue à miroir polygonal (9) s'étendent juste au-dessus de la carte à circuit imprimé (18).

7. Dispositif optoélectronique selon l'une des revendications 1 à 6, **caractérisé par le fait que** la bobine (16) est montée sur un noyau de bobine engagé par pression dans la carte à circuit imprimé (18).

8. Dispositif optoélectronique selon l'une des revendications 1 à 7, **caractérisé par le fait que** la bobine (16) est reliée à la carte à circuit imprimé (18) par des connexions (24).

9. Dispositif optoélectronique selon l'une des revendications 2 à 8, **caractérisé par le fait que** la bobine (16) est en appui contre la face extérieure du tube (20) et présente une section à symétrie de révolution.

10. Dispositif optoélectronique selon l'une des revendications 1 à 9, **caractérisé par le fait qu'**il est prévu sur les faces intérieures du plafond et/ou des parois latérales de la roue à miroir polygonal (9) des éléments de réception sur lesquels l'aimant (17) est fixé.

11. Dispositif optoélectronique selon la revendication 10, **caractérisé par le fait que** l'aimant (17) est collé sur les éléments de réception.

12. Dispositif optoélectronique selon l'une des revendications 10 ou 11, **caractérisé par le fait que** l'aimant (17) et la bobine (16) sont formés chacun de disques de section circulaire qui sont disposés l'un au-dessus de l'autre à faible distance l'un de l'autre dans la cavité de la roue à miroir polygonal (9).

13. Dispositif optoélectronique selon la revendication 12, **caractérisé par le fait que** les disques formant l'aimant (17) et la bobine (16) présentent chacun une ouverture centrale de section circulaire traversant ceux-ci axialement, le tube (20) passant dans les ouvertures.

14. Dispositif optoélectronique selon l'une des revendications 12 ou 13, **caractérisé par le fait que** les éléments de réception servant à la fixation de l'aimant (17) sont formés de renfoncements s'étendant dans le plafond de la roue à miroir polygonal (9).

15. Dispositif optoélectronique selon l'une des revendications 12 à 14, **caractérisé par le fait que** les disques formant l'aimant (17) et la bobine (16) présentent le même diamètre qui est adapté au diamètre de la cavité de la roue à miroir polygonal (9).

16. Dispositif optoélectronique selon l'une des revendications 10 ou 11, **caractérisé par le fait que** la bobine (16) est réalisée sous la forme d'une première bague entourant le tube (20) et que l'aimant (17) est réalisé sous la forme d'une deuxième bague qui est disposée coaxialement à la première bague et entoure celle-ci, la surface périphérique intérieure de la deuxième bague étant située en face de la surface périphérique extérieure de la première bague à faible distance de celle-ci.

17. Dispositif optoélectronique selon la revendication 16, **caractérisé par le fait que** les hauteurs des bagues correspondent essentiellement à la hauteur du tube (20).

18. Dispositif optoélectronique selon l'une des revendications 16 ou 17, **caractérisé par le fait que** les éléments de réception servant à la fixation de l'aimant (17) sont formés de nervures (25) qui font saillie des faces intérieures des parois latérales de la roue à miroir polygonal (9).
